# EUROPEAN PATENT SPECIFICATION

(11) **EP 3 000 373 B1**
(45) Date of publication and mention of the grant of the patent: **26.08.2020**
(21) Application number: 15187412.0
(22) Date of filing: 29.09.2015
(51) Int. Cl.: A47L 9/28

(54) **VACUUM CLEANER**
STAUBSAUGER
ASPIRATEUR

(30) Priority: 29.09.2014 KR 20140129989
(43) Date of publication of application: 30.03.2016
(73) Proprietor: LG Electronics Inc., Yeongdeungpo-gu Seoul 150-721 (KR)
(72) Inventor: LEE, Changhoon, 153-802 Seoul (KR); HAN, Seonghoon, 153-802 Seoul (KR); HA, Gunho, 153-802 Seoul (KR)
(74) Representative: Morrall, Jonathan Ian McLachlan

(56) References cited:
- WO-A1-2014/000794
- GB-A- 2 442 033
- JP-A- 2004 057 367

## Description

### BACKGROUND

### 1. Field

A vacuum cleaner is disclosed herein.

### 2. Background

In general, vacuum cleaners are devices that suck air including dust by using a suction force generated by a suction motor mounted on an inside of a main body and then filter the dust in the inside of the main body.

Such vacuum cleaners are classified into manual cleaners and robotic cleaners. Manual cleaners are cleaners that a user has to perform cleaning manually, and robotic cleaners are cleaners that perform cleaning automatically while traveling an area to be cleaned.

The manual cleaners may be classified into canister type cleaners in which a main body and a suction nozzle are separated from each other and are connected using a connection tube, and upright type cleaners in which a suction nozzle is combined with a main body.

Korean Patent Application Publication No. 10-2006-0118796 (published on November 24, 2006) discloses a power cord outlet for a cleaner.

An example of vacuum cleaner is known from JP2004057367.

In the literature, a cord reel assembly is provided in a main body, and a power cord is connected to an outlet so that power may be supplied to the main body.

In the literature, since the cleaner receives power from the cord reel assembly, the cleaner may be moved by a length of a cord wound on the cord reel assembly when cleaning is performed using the cleaner. Thus, there is a limitation in performing cleaning.

### SUMMARY

The present disclosure is directed to a vacuum cleaner that is capable of being conveniently moved.

The present disclosure is also directed to a vacuum cleaner in which a lifetime of a battery is extended.

Aspects of an invention are defined in the appended independent claim.

The battery comprises a plurality of battery cells, and the BMS manages discharging of each of the plurality of battery cells so that power is capable of being supplied to the suction motor from each of the plurality of battery cells.

The BMS detects a voltage of each of the plurality of battery cells, and the controller stops the suction motor if a voltage of one or more of the plurality of battery cells is less than or equal to a reference voltage.

Determination of the time of stopping the suction motor is changed by the controller according to an operation mode of the suction motor.

When the operation mode of the suction motor is a reference mode, the controller stops the suction motor if a time elapsed of the suction motor operating in the reference mode reaches a reference time, even when a voltage of each of the plurality of battery cells exceeds the reference voltage.

Optionally, the reference mode is a mode in which an intensity of a suction force of the suction motor is the maximum.

Optionally, the reference voltage is 70% or more of a maximum voltage of each battery cell.

Optionally, if a condition on which the reference voltage is changed is satisfied, the controller changes the reference voltage.

Optionally, the condition on which the reference voltage is changed is one selected from the group consisting of a case where the number of times of battery usage exceeds a reference number of times, a case where an accumulated usage time of the battery exceeds a reference accumulated time, a case where a voltage reduction rate according to a discharging time of the battery is larger than a reference rate, and a case where a voltage increase rate according to a charging time of the battery is smaller than a reference rate.

Optionally, the changed reference voltage is a voltage that is greater than or equal to 45% and less than 70% of the maximum voltage of each battery cell.

Optionally, the vacuum cleaner may further comprise a display unit that displays information regarding the necessity of charging of the battery, or an informing unit from which a voice is output, when the suction motor is stopped.

Optionally, when an operation mode of the suction motor is a reference mode, the controller stops the suction motor if a first condition or a second condition is satisfied, and when the operation mode of the suction motor is not the reference mode, the controller stops the suction motor if the first condition is satisfied.

Optionally, the vacuum cleaner may further comprise: a charging device that is separably connected to the cleaner main body and charges the battery; and a boosting device that increases a voltage output from the charging device and supplies the increased voltage to the battery.

Optionally, the vacuum cleaner may further comprise: a power cord that is separably connected to the cleaner main body and supplies commercially available power to the cleaner main body; and a charging device that is disposed in the cleaner main body and is capable of charging the battery.

The details of one or more embodiments are set forth in the accompanying drawings and the description below. Other features will be apparent from the description and drawings, and from the claims.

### BRIEF DESCRIPTION OF THE DRAWINGS

Embodiments will be described in detail with reference to the following drawings in which like reference numerals refer to like elements, and wherein:
Fig. 1 is a perspective view of a vacuum cleaner;
Fig. 2 is an exploded perspective view of a main body of the vacuum cleaner
Fig. 3 is a block diagram of a configuration of the vacuum cleaner:
Fig. 4 is a view illustrating a method of controlling a suction motor based on a battery remaining amount according to an embodiment;
Fig. 5 is a view illustrating an available time of a battery when the suction motor is controlled regardless of the battery remaining amount and an available time of a battery when the suction motor is controlled based on the battery remaining amount;
Fig. 6 is a view illustrating controlling of the suction motor according to the number of times of battery usage according to an embodiment;
Fig. 7 is a perspective view of a vacuum cleaner according to another embodiment; and
Fig. 8 is a block diagram of a configuration of the vacuum cleaner illustrated in Fig. 7.

### DETAILED DESCRIPTION

Reference will now be made in detail to the embodiments, examples of which are illustrated in the accompanying drawings.

In the following detailed description of the preferred embodiments, reference is made to the accompanying drawings that form a part hereof, and in which is shown, by way of illustration, specific preferred embodiments. These embodiments are described in sufficient detail to enable those skilled in the art to practice the subject matter, and it is understood that other embodiments may be utilized and that logical structural, mechanical, electrical, and chemical changes may be made without departing from the scope of the appended claims. To avoid detail not necessary to enable those skilled in the art to practice the subject matter, the description may omit certain information known to those skilled in the art. The following detailed description is, therefore, not to be taken in a limiting sense.

Also, in the description of embodiments, terms such as "first," "second," "A," "B," "(a)," "(b)" or the like may be used herein when describing components. Each of these terms is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

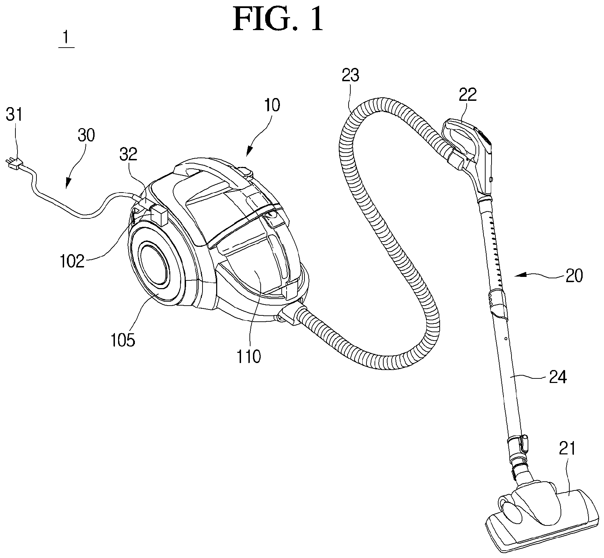

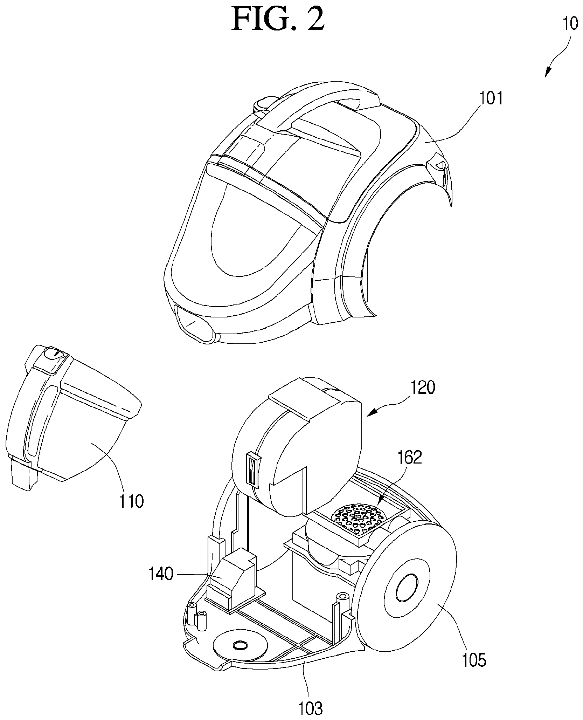

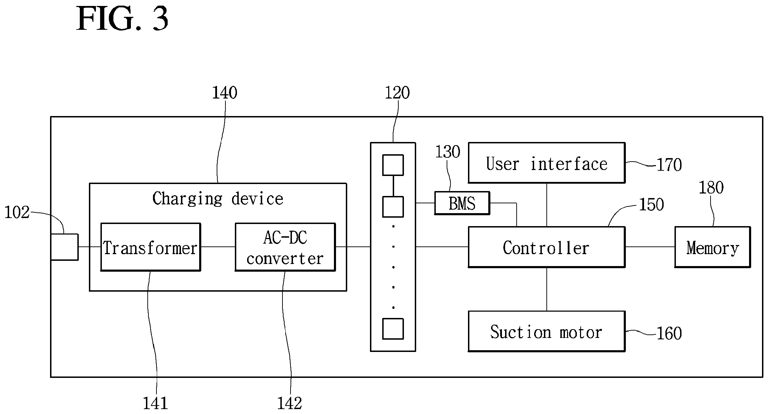

Fig. 1 is a perspective view of a vacuum cleaner according to an embodiment, and Fig. 2 is an exploded perspective view of a main body of the vacuum cleaner according to an embodiment, and Fig. 3 is a block diagram of a configuration of the vacuum cleaner according to an embodiment.

Referring to Figs. 1 through 3, a vacuum cleaner 1 may include a cleaner main body 10 including a suction motor 160 that generates a suction force, and a suction device 20 that guides air including dust toward the cleaner main body 10.

The suction device 20 may include a suction unit 21 for inhaling dust on a surface to be cleaned, for example, on a floor, and connection units 22, 23, and 24 for connecting the suction unit 21 to the cleaner main body 10.

The connection units 22, 23, and 24 may include an extension tube 24 connected to the suction unit 21, a handle 22 connected to the extension tube 24, and a suction hose 23 that connects the handle 22 to the cleaner main body 10.

The vacuum cleaner 1 may further include a dust separation unit (not shown) that separates air and dust sucked by the suction device 20 from each other, and a dust canister 110 that stores dust separated by the dust separation unit. The dust canister 110 may be separably mounted on the cleaner main body 10. The dust separation unit may be manufactured as an element separated from the dust canister 110 or may form one module with the dust canister 110.

The vacuum cleaner 1 may include a battery 120 that supplies power for operating the suction motor 160, a charging device 140 for charging the battery 120, and a power cord 30 that is separably connected to the cleaner main body 10 and supplies commercially available power to the cleaner main body 10.

The power cord 30 may include a plug 31 connected to an outlet, and a cord connector 32 connected to the cleaner main body 10. The cleaner main body 10 may include a main body connector 102 to which the cord connector 32 is connected.

The cleaner main body 10 may include a first body 101 and a second body 103 coupled to a lower side of the first body 101. Wheels 105 may be coupled to both sides of the second body 103, respectively.

The suction motor 160, the battery 120, and the charging device 140 may be installed in the second body 103. The suction motor 160 may be protected by a motor housing 162. That is, the suction motor 160 may be accommodated in the motor housing 162.

In this case, the battery 120 may be positioned lateral to the motor housing 162, i.e., lateral to the suction motor 160 to increase spatial efficiency.

The suction motor 160 and the battery 120 may be positioned between a plurality of wheels 105. The battery 120 may be positioned between one among the plurality of wheels 105 and the suction motor 160. The charging device 140 may be disposed to be spaced apart from the battery 120.

In another example, the battery 120 may also be provided at the suction unit 21. However, in this case, the connection units 22, 23, and 24 may perform a function of transferring power of the battery 120 to the cleaner main body 10.

The dust canister 110 may be separably coupled to the first body 101. The main body connector 102 may be provided at the first body 101.

The battery 120 includes a plurality of battery cells. The plurality of battery cells may include a chargeable/dischargeable secondary battery. The plurality of battery cells may be connected in series.

In an embodiment, a maximum charging voltage (that is the sum of voltages of the plurality of battery cells) that may be charged in the battery 120 has a value that exceeds 42.4 V, in one example. In another example, the maximum charging voltage of the battery 120 may be greater than or equal to 84.8 V.

The charging device 140 performs rectification and smoothing operations, receives a commercially available alternating current (AC) voltage, and converts the commercially available AC voltage into a direct current (DC) voltage. The charging device 140 supplies the converted DC voltage to the battery 120. For example, the charging device 140 converts 220 V of commercially available AC voltage into a DC voltage that exceeds 42.4 V (drops a voltage) and supplies the converted DC voltage to the battery 120.

The charging device 140 may include a transformer 141 that transforms an input AC voltage, and an AC-DC converter 142 that converts an AC voltage output from the transformer 141 into a DC voltage. In this case, the DC voltage output from the AC-DC converter 142 may exceed 42.4 V.

In another example, the transformer 141 may transform the DC voltage output from the AC-DC converter 142. In this case, the DC voltage output from the transformer 141 may exceed 42.4 V.

In still another example, the charging device 140 may not include a transformer, and a circuit for preventing the DC voltage output from the AC-DC converter 142 from being transformed into an AC voltage may also be provided. That is, the AC-DC converter 142 may be an insulation type converter. In the current embodiment, an AC-DC converter having a well-known configuration may be used and thus, a detailed description thereof will be omitted.

In the current embodiment, the suction motor 160 may be a brushless direct current (BLDC) motor, for example. A maximum output of the suction motor 160 may be greater than or equal to 600 W, for example.

When a voltage charged in the battery 120 is less than or equal to 42.4 V, a current is required to be greater than or equal to at least 14.15 A so that the suction motor 160 having a high output may be operated. Thus, a configuration of a circuit required to drive the suction motor 160 is complicated.

However, according to the current embodiment, since a maximum voltage charged in the battery 120 is greater than or equal to 84.8 V, a minimum current required to operate the suction motor 160 may be smaller than approximately 7.1 A. Thus, the configuration of the circuit required to drive the suction motor 160 is simplified.

According to the current embodiment, the DC voltage that exceeds 42.4 V is output from the charging device 140, and the maximum charging voltage of the battery 120 is greater than or equal to 84.8 V. Thus, the suction motor 160 may have a high output. Thus, a suction force of the vacuum cleaner 1 may be increased so that cleaning performance may be improved.

Also, the power cord 30 may be connected to the vacuum cleaner 1 only when the battery 120 is being charged, and when cleaning is performed using the vacuum cleaner 1, the power cord 30 may be separated from the vacuum cleaner 1 and may be advantageously used so that a degree of freedom of mobility of the vacuum cleaner 1 may be improved.

That is, since the vacuum cleaner 1 does not include a cord reel and receives power from the battery 120, a movement distance of the vacuum cleaner 1 is not limited, and while the vacuum cleaner 1 is moved, the vacuum cleaner 1 does not need to ride over a cord wound on the cord reel or to be moved while arranging the cord so that the vacuum cleaner 1 may be smoothly moved.

Also, in the current embodiment, since the battery 120 is electrically connected to the main body connector 102 and the maximum charging voltage of the battery 120 is greater than or equal to 84.8 V, if no transformer 141 is provided, contacting the main body connector 102 may be dangerous to a user. However, in the current embodiment, since the charging device 140 includes the transformer 141, the transformer 141 serves as an insulator so that the user's safety may be improved.

The vacuum cleaner 1 may further include a battery management system (BMS) 130. The BMS 130 may detect a status of each of the plurality of battery cells and may transmit the result of detection to a controller 150.

The BMS 130 may detect a voltage of each of the plurality of battery cells.

Also, the BMS 130 may maintain a uniform voltage between the plurality of battery cells when each of the plurality of battery cells is charged or discharged. That is, the BMS 130 may manage discharging of each of the plurality of battery cells so that power may be supplied to the suction motor 160 from each of the plurality of battery cells.

The controller 150 may control the suction motor 160 and may control an operation of the suction motor 160 based on a voltage of the battery 120.

Meanwhile, the vacuum cleaner 1 may further include a user interface 170. Operation instructions of the vacuum cleaner 1 may be input through the user interface 170, and the user interface 170 may display operation information or status information of the vacuum cleaner 1.

The user interface 170 may be provided at one or more of the handle 22 and the cleaner main body 10. The user interface 170 may be provided in a shape in which an input unit and a display unit are integrally formed, or may include an input unit and a display unit separately. The user interface 170 may include an informing unit from which a voice is output.

Power on, a cleaning mode, and an intensity of the suction force of the vacuum cleaner 1 may be selected using the input unit. The display unit may display at least information regarding the remaining amount of the battery 120.

In one example, the intensity of the suction force may be set stepwise to strong (this being a case in which the suction force is the maximum), medium, and weak (this being a case in which the suction force is the minimum), and the intensity of the suction force of the suction motor 160 may be selected by the input unit. In the present specification, the intensity of the suction force has been described to be controlled in three steps. However, it will be noted that the number of steps for classifying the intensity of the suction force is not limited.

The controller 150 may differently control an operation of the suction motor 160 based on the remaining amount of the battery 120 according to an operation mode of the suction motor 160. Controlling of the suction motor 160 will be described below.

The controller 150 may control the display unit to display information regarding the necessity of charging of the battery 120 when the remaining amount of the battery 120 reaches a reference voltage. The reference voltage may be stored in a memory 180.

In another example, the display unit may display the remaining amount of the battery 120 continuously or stepwise. For example, the display unit may display the remaining amount of the battery 120 in the form of numbers, symbols or graphs. Alternatively, the display unit may include a plurality of light-emitting units and may display the remaining amount of the battery 120 by changing the number of turned on units among the plurality of light-emitting units. Alternatively, the display unit may display the remaining amount of the battery 120 by changing colors of lights irradiated from the plurality of light-emitting units.

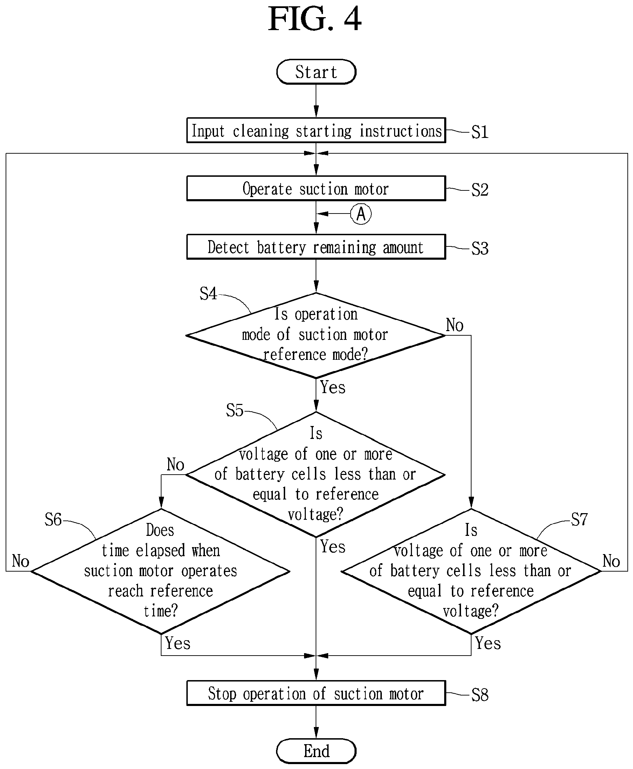

Fig. 4 is a view illustrating a method of controlling a suction motor based on a battery remaining amount according to an embodiment.

Referring to Figs. 1 through 4, cleaning starting instructions may be input through the user interface 170, and the intensity of the suction force of the suction motor 160 may be selected through the user interface 170 (S1).

The controller 150 operates the suction motor 160 with the selected intensity of the suction force of the suction motor 160 (S2).

Power is supplied to the suction motor 160 from the battery 120. While the battery 120 is discharged, the remaining amount of the battery 120, i.e., a voltage of each of the plurality of battery cells is detected by the BMS 130, and the detected voltage is transmitted to the controller 150 (S3).

When the suction motor 160 operates, the controller 150 determines a current intensity of a suction force. In the present specification, when the intensity of the suction force is strong (maximum), the operation mode of the suction motor 160 is a reference mode.

The controller 150 changes a determination condition (that is, a condition for determining a stopping time of the suction motor 160) on which the operation of the suction motor 160 is stopped, according to an operation mode of the suction motor 160.

That is, if the operation mode of the suction motor 160 is the reference mode, when one among a plurality of stopping conditions is satisfied, the controller 150 may stop the suction motor 160. On the other hand, if the operation mode of the suction motor 160 is not the reference mode (a case where the intensity of the suction force is medium or weak (not strong)), when one stopping condition is satisfied, the controller 150 may stop the suction motor 160.

In detail, the controller 150 determines whether the operation mode of the suction motor 160 is the reference mode (S4).

As a result of the determination in operation S4, if the operation mode of the suction motor 160 is the reference mode, the controller 150 determines whether a voltage of one or more of the plurality of battery cells is less than or equal to a reference voltage (S5). In the current embodiment, a condition in which the voltage of one or more of the plurality of battery cells is less than or equal to the reference voltage, will be referred to as a first condition.

In the present specification, the reference voltage may be selected from a voltage that is 70% or more of the maximum voltage of each battery cell. For example, when the maximum voltage of each battery cell is 4.2 V, the reference voltage may be greater than or equal to 2.94 V.

As a result of the determination in operation S5, if the voltage of one or more of the plurality of battery cells is less than or equal to the reference voltage (if the first condition is satisfied), the controller 150 may stop the operation of the suction motor 160 (S8). If the operation of the suction motor 160 is stopped, the display unit may display information regarding the necessity of charging of a battery, or the informing unit may generate a voice informing of the need to charge.

On the other hand, as a result of the determination in operation S5, when the voltage of each of the plurality of battery cells exceeds the reference voltage, the controller 150 determines whether a time elapsed when the suction motor 160 operates in the reference mode, reaches a reference time (S6). In the current embodiment, a condition in which the time elapsed when the suction motor 160 operates in the reference mode, reaches the reference time, will be referred to as a second condition.

As a result of the determination in operation S6, if the time elapsed when the suction motor 160 operates in the reference mode, reaches the reference time (if the second condition is satisfied), the controller 150 may stop the operation of the suction motor 160 (S8). If the operation of the suction motor 160 is stopped, the display unit may display information regarding the necessity of charging of a battery, or the informing unit may generate a voice informing of the need to charge.

In the current embodiment, if the first condition is first determined and the first condition is not satisfied, the second condition is determined. However, unlike this, the second condition may be first determined.

Meanwhile, as a result of the determination in operation S4, if the operation mode of the suction motor 160 is not the reference mode, the controller 150 determines whether the voltage of one or more of the plurality of battery cells is less than or equal to the reference voltage (S7).

As a result of the determination in operation S7, if the voltage of one or more of the plurality of battery cells is less than or equal to the reference voltage (this is the same as a case where the first condition is satisfied), the controller 150 may stop the operation of the suction motor 160 (S8). If the operation of the suction motor 160 is stopped, the display unit may display information regarding the necessity of charging of a battery, or the informing unit may generate a voice informing of the need to charge.

According to the current embodiment, the following effects may be expected.

In the current embodiment, when the suction motor operates, if the battery is not fully discharged and the voltage of one or more of the plurality of battery cells is less than or equal to the reference voltage, the suction motor is stopped so that a temperature increase of the battery may be restricted while the battery is used. If the temperature increase of the battery is restricted, damage to the battery caused by a high temperature can be prevented.

Also, generally, when the battery 120 is discharged, if the temperature of the battery 120 is greater than or equal to a reference temperature, charging of the battery 120 is not performed until the temperature of the battery 120 is lower than the reference temperature regardless of the remaining amount of the battery 120. In this case, charging of the battery 120 is delayed until the temperature of the battery 120 is lower than the reference temperature, which causes an increase in a charging time of the battery 120.

However, according to the current embodiment, since the temperature increase of the battery 120 is restricted, the battery 120 can be charged immediately after the operation of the vacuum cleaner 1 is terminated.

In addition, generally, an available time of the battery is reduced when the battery is fully charged as a battery usage time is increased until the remaining amount of the battery is in a low status while the battery is used once. However, according to the current embodiment, when the suction motor operates, if the battery is not fully discharged and the voltage of one or more of the plurality of battery cells is less than or equal to the reference voltage, the suction motor is stopped so that a discharging amount of the battery when the battery is used once may be reduced and thus the lifetime of the battery can be extended.

Also, when the operation mode of the suction motor is the reference mode, if the time when the suction motor operates in the reference mode, reaches a reference time, the suction motor is stopped. Thus, the discharging amount of the battery may be restricted so that the lifetime of the battery can be extended.

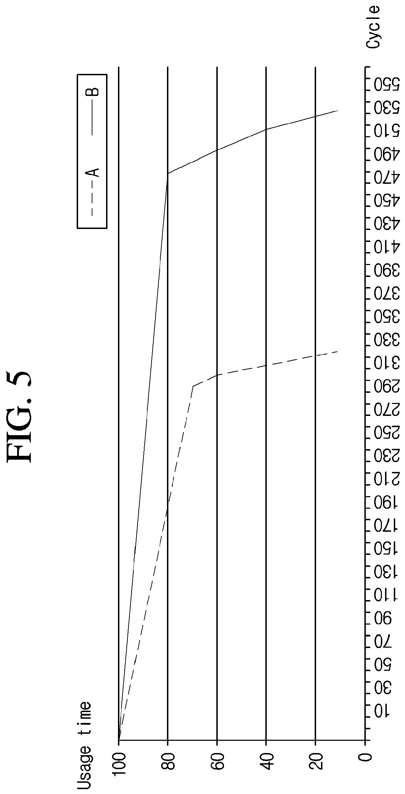

Fig. 5 is a view illustrating an available time of a battery when the suction motor is controlled regardless of the battery remaining amount and an available time of a battery when the suction motor is controlled based on the battery remaining amount.

In Fig. 5, graph A shows an available time of a battery according to the number of times of battery usage when the suction motor is controlled regardless of the battery remaining amount, and graph B shows an available time of a battery according to the number of times of battery usage when the suction motor is controlled based on the battery remaining amount.

In Fig. 5, the vertical axis represents a usage time ratio and a usage time of a battery when an available time of the battery as a new product is 100, and the horizontal axis represents the number of times of battery usage (the number of battery charging cycles).

Referring to Fig. 5, when the suction motor is controlled based on the battery remaining amount compared to a case where the suction motor is controlled regardless of the battery remaining amount, the available time of the battery reduced whenever the number of times of battery usage is increased, may be minimized.

For example, in graph A, when the number of times of battery usage is 200, the battery available time is reduced by about 20% compared to an initial time. However, in graph B, when the number of times of battery usage is about 470, the battery available time is reduced by about 20% compared to the initial time.

Meanwhile, the available time after the battery is fully charged is reduced as the number of times of battery usage is increased. Thus, the controller 150 may perform additional control so as to reduce the available time of the battery when the number of times of battery usage is increased.

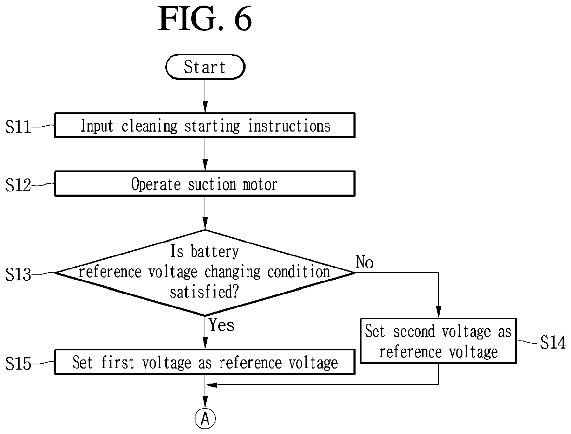

Fig. 6 is a view illustrating controlling of the suction motor according to the number of times of battery usage according to an embodiment.

Referring to Fig. 4 and 6, the cleaning starting instructions may be input through the user interface 170, and the intensity of the suction force of the suction motor 160 may be selected through the user interface 170 (S11).

The controller 150 operates the suction motor 160 with the selected intensity of the suction force of the suction motor 160 (S12).

Then, power is supplied to the suction motor 160 from the battery 120.

When the suction motor 160 operates, the controller 150 determines whether a reference voltage changing condition of the battery 120 is satisfied (S13).

The controller 150 may determine that the reference voltage changing condition of the battery 120 is satisfied when the number of times of battery usage exceeds a reference number of times, or when an accumulated usage time of the battery exceeds a reference accumulated time, or when a voltage reduction rate according to a discharging time of the battery is larger than a reference rate, or when a voltage increase rate according to a charging time of the battery is smaller than a reference rate.

When the voltage increase rate according to the charging time of the battery is smaller than the reference rate, the necessity of changing the reference voltage of the battery while the battery is charged, is stored in the memory 180, and the reference voltage may be changed when the battery is discharged thereafter.

As a result of the determination in operation S13, the controller 150 sets a first voltage as the reference voltage when the reference voltage changing condition of the battery 120 is not satisfied (S15).

On the other hand, as a result of the determination in operation S13, the controller 150 sets a second voltage as the reference voltage when the reference voltage changing condition of the battery 120 is satisfied (S14).

In the current embodiment, the first voltage may be selected from a voltage that is 70% or more of a maximum voltage of each battery cell. For example, when the maximum voltage of each battery cell is 4.2 V, the first voltage may be greater than or equal to 2.94 V.

The second voltage is lower than the first voltage and may be selected from a voltage that is 45% or more of the maximum voltage of each battery cell. For example, when the maximum voltage of each battery cell is 4.2 V, the second voltage may be greater than or equal to 1.89 V.

After the first voltage or the second voltage is set as the reference voltage, the controller 150 may perform a procedure below the third operation of Fig. 4.

According to the current embodiment, when the number of times of battery usage is increased or the accumulated usage time is increased, the reference voltage is changed from the first voltage into the second voltage so that the battery usage time reduced when the vacuum cleaner 1 operates once, may be minimized.

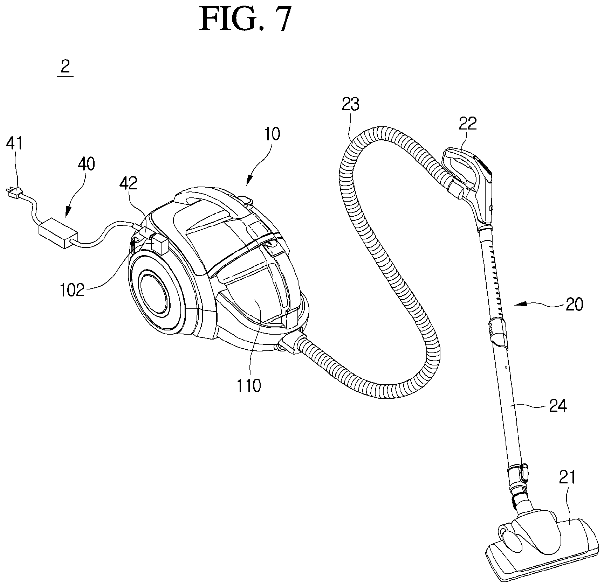

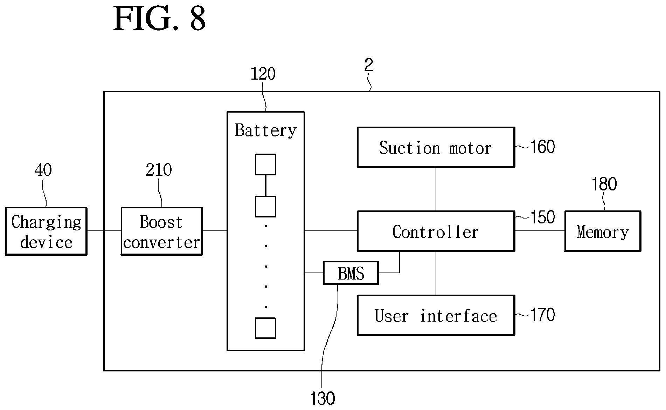

Fig. 7 is a perspective view of a vacuum cleaner according to another embodiment, and Fig. 8 is a block diagram of a configuration of the vacuum cleaner illustrated in Fig. 7.

The other portions of the current embodiment are the same as those of the previous embodiment except that a charging device is separably connected to the vacuum cleaner. Thus, hereinafter, only characteristic portions of the current embodiment will be described.

Referring to Figs. 7 and 8, a vacuum cleaner 2 according to the current embodiment may further include a cleaner main body 10 and a charging device 40 that is separably connected to the cleaner main body 10 and performs charging of the battery 120.

The charging device 40 may include a power cord 41 connected to an outlet and a charging device connector 42 connected to the cleaner main body 10. The cleaner main body 10 may include a main body connector 102 to which the charging device connector 42 is connected.

The charging device 40 performs rectification and smoothing operations, receives a commercially available AC voltage, and converts the commercially available AC voltage into a DC voltage. The charging device 40 supplies the converted DC voltage to the cleaner main body 10. In one example, the charging device 40 converts 220 V of commercially available AC voltage into a DC voltage that is less than or equal to 42.4 V (drops a voltage) and supplies the converted DC voltage to the cleaner main body 10.

Thus, since the DC voltage that is less than or equal to 42.4 V is output from the charging device connector 42 of the charging device 40, there is no problem in the user's safety even when no insulating device is provided at the charging device connector 42. Of course, an insulating device may be provided at the charging device connector 42.

In the current embodiment, in order to operate the suction motor 160 having a high output by using a voltage charged in the battery 120, the cleaner main body 10 may further include a boosting device that boosts a voltage by receiving the DC voltage that is less than or equal to 42.4 V from the charging device 40.

In Fig. 8, a boost converter 210 is used as an example of the boosting device. However, it will be noted that, in the current embodiment, a configuration of the boosting device is not limited.

In the current embodiment, the DC voltage that is less than or equal to 42.4 V input to the boost converter 210 is boosted by two times or more so that a voltage that is greater than or equal to 84.8 V may be charged in the battery 120.

The boost converter 210 may include an inductor, a diode, a capacitor, and a switching element. The switching element is repeatedly turned on/off at a high speed by control of the controller 150 so that the boost converter 210 may boost an input voltage.

In this case, the switching element may be configured of a metal oxide semiconductor field effect transistor (MOSFET). However, the present disclosure is not limited thereto, and the switching element may also be configured of a bipolar junction transistor (BJT) or an insulated gate bipolar transistor (IGBT).

In another example, a transformer may be additionally provided between the boosting device and the battery 120.

If no transformer is provided, the main body connector 102 may be insulated, and if the transformer is provided, the transformer serves as an insulating device. Thus, the main body connector 102 may not be insulated.

As described above, a canister type cleaner has been described as a cleaner. However, the present disclosure may be applied to an upright type cleaner. In this case, a battery that supplies power to a suction motor may be provided at a suction unit or a cleaner main body. Also, the above-described charging device or power cord may also be provided at the suction unit or the cleaner main body.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. A vacuum cleaner comprising:
a cleaner main body (10) comprising a suction motor (160) for generating a suction force;
a suction unit arranged to communicate with the cleaner main body (10) and receive air and dust;
a battery (120) arranged to supply power to the suction motor (160), wherein the battery comprises a plurality of battery cells;
a battery management system "BMS" (130) arranged to detect a status of the battery (120); and
a controller (150) arranged to control an operation of the suction motor (160),
wherein the controller (150) is arranged to determine a time to stop the suction motor (160) based on a voltage detected by the BMS (130),
**characterized in that**
the controller (150) is arranged to change the determined time to stop the suction motor (160) according to an operation mode of the suction motor (160),
wherein the controller (150) is configured to determine whether the operation mode of the suction motor (160) is a reference mode (S4),
wherein, when the operation mode of the suction motor (160) is a reference mode, that is, when the controller (150) determines that the intensity of the suction force is strong, the controller (150) is arranged to stop the suction motor (160) if an operation time of the suction motor (160) in the reference mode reaches a reference time, even if a voltage of each of the plurality of battery cells exceeds a reference voltage.

2. The vacuum cleaner according to claim 1, wherein the BMS (130) is arranged to manage discharge of each of the plurality of battery cells so that each of the plurality of battery cells is capable of supplying power to the suction motor (160).

3. The vacuum cleaner according to claim 2, wherein the BMS (130) is arranged to detect a voltage of each of the plurality of battery cells, and the controller (150) is arranged to stop the suction motor (160) if a voltage of one or more of the plurality of battery cells is less than or equal to a reference voltage.

4. The vacuum cleaner according to claim 1, wherein the reference mode is a mode in which an intensity of a suction force of the suction motor (160) is at a maximum.

5. The vacuum cleaner according to claim 3, wherein the reference voltage is 70% or more of a maximum voltage of each battery cell.

6. The vacuum cleaner according to claims 3 or 5, wherein, the controller (150) is arranged to change the reference voltage if a condition is satisfied.

7. The vacuum cleaner according to claim 6, wherein the condition is one selected from the group comprising:
the number of times of battery usage exceeds a reference number of times,
an accumulated usage time of the battery (120) exceeds a reference accumulated time,
a voltage reduction rate according to a discharging time of the battery (120) is greater than a reference rate, and
a voltage increase rate according to a charging time of the battery (120) is less than a reference rate.

8. The vacuum cleaner according to claim 6, wherein the changed reference voltage is a voltage that is greater than or equal to 45% and less than 70% of the maximum voltage of each battery cell.

9. The vacuum cleaner according to any preceding claim, further comprising a display unit arranged to display information regarding the necessity to charge the battery (120), and/or an informing unit arranged to output a sound, when the suction motor (160) is stopped.

10. The vacuum cleaner according to claim 1, wherein, when an operation mode of the suction motor (160) is a reference mode, the controller (150) is arranged to stop the suction motor (160) if a first condition or a second condition is satisfied, and
when the operation mode of the suction motor (160) is not the reference mode, the controller (150) is arranged to stop the suction motor (160) if the first condition is satisfied.

11. The vacuum cleaner according to claim 10, wherein the first condition is a condition in which the voltage of one or more of the plurality of battery cells is less than or equal to the reference voltage and/or wherein the second condition is a condition in which the time elapsed when the suction motor (160) operates in the reference mode reaches the reference time.

12. The vacuum cleaner according to any preceding claim, further comprising:
a charging device (40) that is separably connected to the cleaner main body (10) and arranged to charge the battery (120); and
a boosting device arranged to increase a voltage output from the charging device (40) and supply the increased voltage to the battery (120).

13. The vacuum cleaner according to any preceding claim, further comprising:
a power cord (30) arranged to separably connect to the cleaner main body (10) and supply commercially available power to the cleaner main body (10); and
a charging device (140) disposed in the cleaner main body (10) and capable of charging the battery (120).

## Patentansprüche

1. Staubsauger, der Folgendes umfasst:
einen Staubsaugerhauptkörper (10), umfassend einen Saugmotor (160) zum Erzeugen einer Saugkraft;
eine Saugeinheit, angeordnet zum Kommunizieren mit dem Staubsaugerhauptkörper (10) und Aufnehmen von Luft und Staub;
eine Batterie (120), angeordnet zum Zuführen von Leistung zum Saugmotor (160), wobei die Batterie mehrere Batteriezellen umfasst;
ein Batterieverwaltungssystem "BMS" (130), angeordnet zum Detektieren eines Status der Batterie (120); und
eine Steuerung (150), angeordnet zum Steuern eines Betriebs des Saugmotors (160),
wobei die Steuerung (150) angeordnet ist zum Bestimmen eines Zeitpunkts zum Stoppen des Saugmotors (160) basierend auf einer durch das BMS (130) detektierten Spannung,
**dadurch gekennzeichnet, dass**
die Steuerung (150) angeordnet ist zum Ändern des bestimmten Zeitpunkts zum Stoppen des Saugmotors (160) gemäß einem Betriebsmodus des Saugmotors (160), wobei die Steuerung (150) ausgelegt ist zum Bestimmen, ob der Betriebsmodus des Saugmotors (160) ein Referenzmodus (S4) ist,
wobei, wenn der Betriebsmodus des Saugmotors (160) ein Referenzmodus ist, das heißt, wenn die Steuerung (150) bestimmt, dass die Intensität der Saugkraft stark ist, die Steuerung (150) angeordnet ist zum Stoppen des Saugmotors (160), wenn eine Betriebszeit des Saugmotors (160) im Referenzmodus eine Referenzzeit erreicht, selbst wenn eine Spannung jeder der mehreren Batteriezellen eine Referenzspannung überschreitet.

2. Staubsauger nach Anspruch 1, wobei das BMS (130) angeordnet ist zum Verwalten des Entladens jeder der mehreren Batteriezellen, sodass jede der mehreren Batteriezellen in der Lage ist, Leistung zum Saugmotor (160) zuzuführen.

3. Staubsauger nach Anspruch 2, wobei das BMS (130) angeordnet ist zum Detektieren einer Spannung von jeder der mehreren Batteriezellen und die Steuerung (150) angeordnet ist zum Stoppen des Saugmotors (160), wenn eine Spannung von einer oder mehreren der mehreren Batteriezellen kleiner als oder gleich einer Referenzspannung ist.

4. Staubsauger nach Anspruch 1, wobei der Referenzmodus ein Modus ist, in dem eine Intensität einer Saugkraft des Saugmotors (160) bei einem Maximum ist.

5. Staubsauger nach Anspruch 3, wobei die Referenzspannung 70 % oder mehr einer maximalen Spannung jeder Batteriezelle ist.

6. Staubsauger nach Ansprüchen 3 oder 5, wobei die Steuerung (150) angeordnet ist zum Ändern der Referenzspannung, wenn eine Bedingung erfüllt ist.

7. Staubsauger nach Anspruch 6, wobei die Bedingung eine ist, die aus der Gruppe ausgewählt ist, die Folgendes umfasst:
die Häufigkeit der Batterienutzung überschreitet eine Referenzhäufigkeit,
eine akkumulierte Verwendungszeit der Batterie (120) überschreitet einen Referenzwert für die akkumulierte Zeit,
eine Spannungsverringerungsrate gemäß einer Entladezeit der Batterie (120) ist größer als eine Referenzrate, und
eine Spannungserhöhungsrate gemäß einer Ladezeit der Batterie (120) ist kleiner als eine Referenzrate.

8. Staubsauger nach Anspruch 6, wobei die geänderte Referenzspannung eine Spannung ist, die größer als oder gleich 45 % und kleiner als 70 % der maximalen Spannung jeder Batteriezelle ist.

9. Staubsauger nach einem der vorhergehenden Ansprüche, ferner umfassend eine Anzeigeeinheit, angeordnet zum Anzeigen von Informationen bezüglich der Notwendigkeit zum Laden der Batterie (120), und/oder eine Informationseinheit, angeordnet zum Ausgeben eines Klangs, wenn der Saugmotor (160) gestoppt ist.

10. Staubsauger nach Anspruch 1, wobei, wenn ein Betriebsmodus des Saugmotors (160) ein Referenzmodus ist, die Steuerung (150) angeordnet ist zum Stoppen des Saugmotors (160), wenn eine erste Bedingung oder eine zweite Bedingung erfüllt ist, und
wobei, wenn der Betriebsmodus des Saugmotors (160) nicht der Referenzmodus ist, die Steuerung (150) angeordnet ist zum Stoppen des Saugmotors (160), wenn die erste Bedingung erfüllt ist.

11. Staubsauger nach Anspruch 10, wobei die erste Bedingung eine Bedingung ist, bei der die Spannung von einer oder mehreren der mehreren Batteriezellen kleiner als oder gleich der Referenzspannung ist und/oder wobei die zweite Bedingung eine Bedingung ist, in der die verstrichene Zeit, die der Saugmotor (160) im Referenzmodus betrieben wird, die Referenzzeit erreicht.

12. Staubsauger nach einem der vorhergehenden Ansprüche, der ferner Folgendes umfasst:
eine Ladevorrichtung (40), die trennbar mit dem Staubsaugerhauptkörper (10) verbunden ist und angeordnet ist, um die Batterie (120) zu laden; und
eine Verstärkungsvorrichtung, angeordnet zum Erhöhen einer Spannungsausgabe von der Ladevorrichtung (40) und Zuführen der erhöhten Spannung zur Batterie (120).

13. Staubsauger nach einem der vorhergehenden Ansprüche, der ferner Folgendes umfasst:
ein Stromkabel (30), angeordnet zum trennbaren Verbinden mit dem Staubsaugerhauptkörper (10) und Zuführen von kommerziell verfügbarer Leistung zum Staubsaugerhauptkörper (10); und
eine Ladevorrichtung (140), angeordnet im Staubsaugerhauptkörper (10) und in der Lage, die Batterie (120) zu laden.

## Revendications

1. Aspirateur comprenant :
un corps principal d'aspirateur (10) comprenant un moteur d'aspiration (160) pour générer une force d'aspiration ;
une unité d'aspiration agencée pour communiquer avec le corps principal d'aspirateur (10) et recevoir l'air et la poussière ;
une batterie (120) agencée pour alimenter le moteur d'aspiration (160), la batterie comprenant une pluralité de cellules de batterie ;
un système de gestion de batterie "BMS" (130) agencé pour détecter un état de la batterie (120) ; et
un dispositif de commande (150) agencé pour commander un fonctionnement du moteur d'aspiration (160),
le dispositif de commande (150) étant agencé pour déterminer un temps pour arrêter le moteur d'aspiration (160) sur la base d'une tension détectée par le BMS (130), **caractérisé en ce que**
le dispositif de commande (150) est agencé pour modifier le temps déterminé pour arrêter le moteur d'aspiration (160) selon un mode de fonctionnement du moteur d'aspiration (160), le dispositif de commande (150) étant configuré pour déterminer si le mode de fonctionnement du moteur d'aspiration (160) est un mode de référence (S4),
lorsque le mode de fonctionnement du moteur d'aspiration (160) est un mode de référence, c'est-à-dire lorsque le dispositif de commande (150) détermine que l'intensité de la force d'aspiration est forte, le dispositif de commande (150) étant agencé pour arrêter le moteur d'aspiration (160) si un temps de fonctionnement du moteur d'aspiration (160) dans le mode de référence atteint un temps de référence, même si une tension de chacune de la pluralité de cellules de batteries dépasse une tension de référence.

2. Aspirateur selon la revendication 1, le BMS (130) étant agencé pour gérer la décharge de chacune de la pluralité de cellules de batterie de sorte que chacune de la pluralité de cellules de batterie est apte à fournir de l'énergie au moteur d'aspiration (160).

3. Aspirateur selon la revendication 2, le BMS (130) étant agencé pour détecter une tension de chacune de la pluralité de cellules de batterie, et le dispositif de commande (150) étant agencé pour arrêter le moteur d'aspiration (160) si une tension d'une ou plusieurs de la pluralité de cellules de batterie est inférieure ou égale à une tension de référence.

4. Aspirateur selon la revendication 1, le mode de référence étant un mode dans lequel une intensité d'une force d'aspiration du moteur d'aspiration (160) est à un maximum.

5. Aspirateur selon la revendication 3, la tension de référence étant égale ou supérieure à 70 % d'une tension maximale de chaque cellule de batterie.

6. Aspirateur selon la revendication 3 ou 5, le dispositif de commande (150) étant agencé pour modifier la tension de référence si une condition est satisfaite.

7. Aspirateur selon la revendication 6, la condition étant une condition choisie dans le groupe comprenant :
le nombre de fois où l'utilisation de batterie dépasse un nombre de fois de référence,
un temps d'utilisation cumulé de la batterie (120) dépasse un temps cumulé de référence,
une vitesse de réduction de tension en fonction d'un temps de décharge de la batterie (120) est supérieure à une vitesse de référence, et
une vitesse d'augmentation de tension en fonction d'un temps de charge de la batterie (120) est inférieure à une vitesse de référence.

8. Aspirateur selon la revendication 6, la tension de référence modifiée étant une tension qui est supérieure ou égale à 45 % et inférieure à 70 % de la tension maximale de chaque cellule de batterie.

9. Aspirateur selon l'une quelconque des revendications précédentes, comprenant en outre une unité d'affichage agencée pour afficher des informations concernant la nécessité de charger la batterie (120), et/ou une unité d'informations agencée pour émettre un son, lorsque le moteur d'aspiration (160) est arrêté.

10. Aspirateur selon la revendication 1, lorsqu'un mode de fonctionnement du moteur d'aspiration (160) est un mode de référence, le dispositif de commande (150) étant agencé pour arrêter le moteur d'aspiration (160) si une première condition ou une seconde condition est satisfaite, et lorsque le mode de fonctionnement du moteur d'aspiration (160) n'est pas le mode de référence, le dispositif de commande (150) étant agencé pour arrêter le moteur d'aspiration (160) si la première condition est satisfaite.

11. Aspirateur selon la revendication 10, la première condition étant une condition dans laquelle la tension d'une ou plusieurs de la pluralité de cellules de batterie est inférieure ou égale à la tension de référence et/ou la seconde condition étant une condition dans laquelle le temps écoulé lorsque le moteur d'aspiration (160) fonctionne dans le mode de référence atteint le temps de référence.

12. Aspirateur selon l'une quelconque des revendications précédentes, comprenant en outre :
un dispositif de charge (40) qui est raccordé de manière séparable au corps principal d'aspirateur (10) et agencé pour charger la batterie (120) ; et
un dispositif d'amplification agencé pour augmenter une tension de sortie du dispositif de charge (40) et pour fournir la tension accrue à la batterie (120).

13. Aspirateur selon l'une quelconque des revendications précédentes, comprenant en outre :
un cordon d'alimentation (30) agencé pour se raccorder de manière séparable au corps principal d'aspirateur (10) et pour fournir une alimentation disponible dans le commerce au corps principal d'aspirateur (10) ; et
un dispositif de charge (140) disposé dans le corps principal d'aspirateur (10) et apte à charger la batterie (120) .
